# EUROPEAN PATENT APPLICATION

(11) **EP 4 768 432 A1**
(43) Date of publication of application: **01.07.2026**
(21) Application number: 24223853.3
(22) Date of filing: 31.12.2024
(51) Int. Cl.: C01B 32/05

(54) **AN OPTIMIZED PROCESS FOR PRODUCING ISOTROPIC PETROLEUM-BASED PRODUCTS AND CARBON PRECURSORS**

(71) Applicant: Rain Carbon bv, 9060 Zelzate (BE)
(72) Inventor: Claes, Joris, 9130 Verrebroek (BE); Denoo, Bram, 8310 Assenbroek (BE); Van de Vyvere, Vincent, 9060 Zelzate (BE)
(74) Representative: BiiP bv

(57) **Abstract**

The present invention is directed a process for producing a isotropic carbon precursor is provided comprising (a) a higher-pressure/high-temperature step (HPTR) comprising heating a petroleum-based raw material and maintaining the temperature between 430-700°C at a pressure above 10 barg, for a residence time between 3 and 30min, and (b) subsequently quenching.

## Description

### TECHNICAL FIELD

The present invention generally relates to methods for producing isotropic petroleum-based products from petroleum-based raw materials, and in particular isotropic carbon precursors.

Further, the present invention relates to the use of such isotropic petroleum-based product as a carbon precursor material for use in impregnation/binding/coating processes for the manufacturing of carbon electrodes, graphite electrodes, carbon-based particles and aggregates.

In addition, the present invention relates to the use of such isotropic petroleum-based product as a carbon precursor material for the manufacturing of electrode paste for Söderberg smelters, in the manufacturing of semi-graphitized or graphitized electrodes for aluminum production, in the manufacturing of graphitized electrodes for electric arc furnaces, and in the manufacturing of carbon-containing materials for energy storage applications, being materials such as synthetic graphite, carbon-coated natural graphite, hard carbon, or silicon-carbon composites.

Furthermore, the present invention also relates to an isotropic petroleum-based based product for use as an equivalent for coal tar, in particular for use as a raw material in the production of carbon precursor material.

### BACKGROUND

Isotropic carbon precursors are essential in the manufacturing of graphite electrodes for electric arc furnaces and carbon electrodes for aluminum production (including prebaked anodes and Soederberg pastes). The chemical composition of the carbon precursor determines the physical and chemical properties of the carbonized or graphitized final article which are critical for demanding applications.

Also, in impregnation processes in the manufacturing of graphite electrodes or in coating processes of graphite particles, isotropic carbon precursor material or coating material used as carbon precursor is essential.

Traditionally, isotropic carbon precursors are derived from coal tar due to its high aromaticity and ease of processing. In addition, it is converted into electrically conductive carbon during the carbonization process at very high coke yield, thereby avoiding a high porosity in the resulting article due to fewer volatiles formed during the carbonization process.

However, the recent and future limited availability of coal tar and the increasing demand for carbon materials have driven the exploration of alternative feedstocks for carbon precursors, such as petroleum-based raw materials. These have the advantage of better availability, but result in low-grade thermoplastic carbon precursor materials and present unique challenges in their conversion to isotropic carbon precursors for several reasons.

In general, the lower aromatic content, higher heterogeneity, and different composition compared to coal tar make their processing to carbon precursors less obvious compared to coal tar. This is even more challenging when aiming to reach carbon precursor material characteristics as equivalent as possible to coal tar in order not to disturb final uses processes and applications -

More specifically, many petroleum-based raw materials suffer from two major limitations compared to coal tar in their potential use for carbon precursor production :[1] a lower yield of the petroleum raw material in the conversion to carbon precursor and [2] a general lower molecular weight (MW) distribution and a higher degree of alkylation of the resulting carbon precursors, resulting in off-spec carbon precursor materials.

Existing methods to convert petroleum-based aromatic substances into suitable raw materials for carbon precursor production and/or to produce petroleum-based carbon precursors, attempt to alleviate the above problems, but keep suffering from two major drawbacks:

Firstly, many known processes are focused on yield improvement only, and do not or not sufficiently target quality improvement of the carbon precursor material.

Secondly, many proposed processes cannot be operated reliably as they hold major risks for leading to substantial fouling by carbonaceous deposits in the reactor.

It is therefore clear that achieving petroleum-based isotropic carbon precursors with the desired composition, quality, consistency, and conversion efficiency and at the same time integrate that in a reliable/tolerant process has proven to be a significant challenge in the industry, and that existing methods fail to provide a robust solution that ensures both process efficiency and product quality.

Given the above, it is a general objective of the present invention to provide a novel process for producing a petroleum-based alternative for coal tar-based isotropic carbon precursors which meets the necessary requirements for the manufacturing of carbon and graphite electrodes, i.e. resulting in equivalent or better coke value, flashpoint, viscosity, and similar processing and performance of graphite electrodes, prebaked anodes and pastes used in Soederberg technology, as well as carbon-containing materials for energy storage applications such as synthetic graphite, carbon-coated natural graphite, or silicon carbon composites.

More specifically, it is an objective of the present invention to provide a novel process providing optimized product quality as well as process reliability compared to prior art processes.

To address these objectives, the present invention introduces a thermal treatment process involving a specific high-pressure/high-temperature thermal reaction (HPTR) step. The invention overcomes the limitations of prior art, offering a scalable and industrially viable solution for producing isotropic petroleum-based products, particularly high-quality isotropic carbon precursors.

### SUMMARY

In a first aspect of the present invention, a process for producing a isotropic carbon precursor is provided comprising
a) a high-pressure/high-temperature step (HPTR) comprising heating a petroleum-based raw material and maintaining the temperature between 430-700°C at a pressure above 10 barg, for a residence time between 3 and 30 min, and
b) a subsequent quenching step.

In a second aspect, the present invention provides a isotropic petroleum-based product of which the distillation residue (ASTM D1160) at 474 AET has a Mettler softening point (D3104) of at least 100°C. This isotropic petroleum-based product may be further characterized by having an increased average molecular weight compared to the average molecular weight of the petroleum-based raw material it is derived from, but with lower increase compared to the increase in average molecular weight (after step (c)) of the isotropic petroleum-based product of co-pending patent application EP24223849.1 filed December 31, 2024.

In a third aspect, the present invention provides a process for producing an isotropic carbon precursor comprising feeding a raw material into a low-pressure/low-temperature step (LPTR), said LPTR comprising maintaining the temperature between 300-430°C and a pressure below 1 barg for a residence time between 1 and 40 hours under continuous stirring, and/or a fractionating and/or evaporation step whereby the raw material is an isotropic petroleum-based product of which the distillation residue (ASTM D1160) at 474 AET has a Mettler softening point (D3104) of at least 100°C. This isotropic petroleum-based product may be further characterized by having a increased average molecular weight compared to the average molecular weight of the petroleum-based raw material it is derived from, but with lower increase compared to the increase in average molecular weight (after step (c)) of the isotropic petroleum-based product of co-pending patent application EP24223849.1 filed December 31, 2024.

In a fourth aspect, a petroleum-based carbon precursor is provided characterized by an SPM between 65 and 280°C, a CV > 50% weight and a mesophase > 10µm content below 1% vol.

### BRIEF DESCRIPTION OF THE DRAWINGS

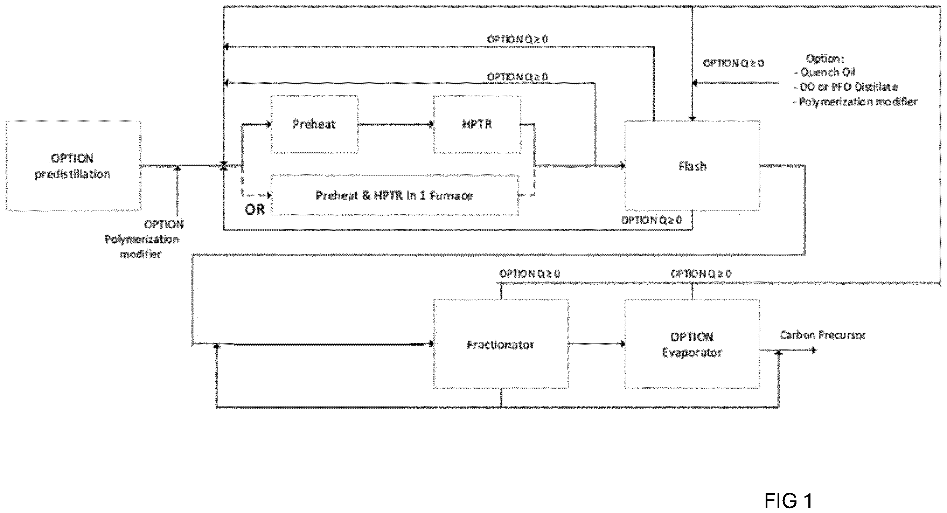

FIG 1 illustrates a process scheme representing an embodiment in accordance with the present invention.

### DETAILED DESCRIPTION

In a first aspect the present invention, a process for producing an isotropic carbon precursor is provided comprising
a) a high-pressure/high-temperature step (HPTR) comprising heating a petroleum-based raw material and maintaining the temperature between 430-700°C at a pressure above 10 barg, for a residence time between 3 and 30 min, and
b) a subsequent quenching step.

This process provides a technologically advanced solution to a long-standing challenge in the field of carbon precursor production and makes it highly relevant for industries seeking cost-effective and high-performance carbon precursors.

The HPTR step provides a highly reactive environment under elevated temperatures (430-700°C) and pressures (above 10 barg) within a short residence time (3-30 minutes). This combination of specific temperature, pressure and residence time ensures precise control of molecular weight distribution, suppresses mesophase and coke formation, and produces high-quality isotropic carbon precursors suitable for industrial applications. It represents a significant advancement in carbon material production, meeting the growing demand for high-performance isotropic carbon precursors in a sustainable and economically viable manner.

Without being bound by any theory, the HPTR is adapted to generate radicals and subsequent radical polymerization for rapid and controlled molecular reorganization, and may result in a higher polymerization degree, i.e. an increased contribution of large aromatic polymers to the molecular weight (MW) distribution, and a higher conversion rate and or yield compared to state-of-the-art processes, while avoiding coke formation or carbon aggregation, deposits and fouling.

In the HPTR step, the average molecular weight of the petroleum-based material increases relatively fast. Consequently, the average molecular weight of the isotropic petroleum-based product after step (b) is higher than the average molecular weight of the petroleum-based raw material, but with lower increase compared to the increase in average molecular weight (after step (c)) of the isotropic petroleum-based product of co-pending patent application EP24223849.1 filed December 31, 2024.

The process of the present invention carefully balances high-temperature kinetics with low-temperature kinetics in order to optimize the different reaction mechanisms, resulting in a robust, scalable, and industrially relevant solution.

In addition, this process can be implemented in continuous or semi-continuous reactor systems, enabling large-scale production with consistent product quality, and is applicable to a range of petroleum-based raw materials, such as Pyrolysis Fuel oil (PFO) or Ethylene Cracker residue (ECR) or decant oil (DO) from a catalytic cracking process or slurry oil, or hydrocracker/hydrotreater residue, or other aromatic streams such as solvent de-asphalting (SDA) based asphaltene fractions, or a combination thereof. The reactivity of the material can be tailored by combining different feedstocks and/or their distillates.

In an embodiment in accordance with the present invention, in the HPTR step the petroleum-based raw material is maintained at a pressure between 10 and 60 barg, or between 15 and 60 barg, or between 20 and 60 barg, or even more preferably between 20 and 35 barg.

In another embodiment in accordance with the present invention or in combination with the above embodiment, in the HPTR step the petroleum-based raw material is maintained at a temperature between 400-600°C, preferably between 500 and 600°C, and even more preferably between 500 and 550°C.

In still another embodiment in accordance with the present invention or in any of the above embodiments, in the HPTR step the residence time is between 5 and 30, preferably 5 and 15 min, and even more preferably above 10 minutes or between 10 and 15 minutes.

In a preferred embodiment in accordance with the present invention, in the HPTR step the petroleum-based raw material is maintained at a pressure between 10 and 60 barg, a temperature between 400-600°C, and a residence time between 5 and 30 minutes.

In another preferred embodiment in accordance with the present invention, in the HPTR step, the petroleum-based raw material is maintained at a pressure above 20barg, preferably between 20 and 60 barg, for a residence time above 10 minutes or between 10 and 30 minutes.

In an embodiment of the present invention or in any of the above embodiments, the HPTR is a heated tube reactor process, taken alone or in a combination of a furnace and one or more heated tube reactors. In an embodiment, the tube reactor (s) may comprise a static mixer. A static mixer is a device used in tube reactors to enhance the mixing of fluids as they flow through the reactor without the need for moving parts. It typically consists of a series of stationary, structured elements or baffles placed inside the tube, designed to divide, redirect, and recombine the flow of material. This promotes efficient mixing of the reactants and ensures uniform conditions throughout the reactor. Preferably, heating occurs stepwise.

In an alternative to the above embodiment, HPTR may be executed as a continuously stirred plug flow reactor process, taken alone or in a combination of a furnace and one or more continuously stirred plug flow reactors. Preferably, heating occurs stepwise.

In the context of the present invention, quenching is generally a rapid cooling process used to abruptly reduce the temperature of the reaction mixture to stop or slow down ongoing chemical reactions and stabilize the reaction mixture after the HPTR.

In an embodiment of the present invention of in any the above embodiments, quenching may be achieved by means of a heat exchanger or (flash) evaporation, or a combination thereof.

Alternatively, or in combination with the foregoing embodiment, quenching may comprise adding an oil, a DO distillate, or a PFO distillate, or any combination thereof. The aim of quenching the reaction mixture using an oil or distillate is to dilute and cool down the reacting mixture. On the one hand, the concentration effect of the dilution will slow down the free radical propagation in the reacting systems while on the other hand mixing with a lower temperature oil will lower the temperature. Any remaining reactive radical centers will terminate by either intra-system recombination or by hydrogen transfer from the quench oil. Sufficiently large aromatic components will be able to exist as persistent radical species. Assuming that the HPTR step has produced an isotropic mixture, the dilution will aid in sustaining the isotropy.

In an embodiment, the quenching step may cool the heated material to a maximum temperature between 300-430°C.

In an embodiment of the present invention, the quenching oil or distillate may act as a polymerization modifier, which may either enhance or inhibit radical polymerization reactions.

The above embodiments of the process of the present invention may result in an advantageous isotropic petroleum-based product, of which the distillation residue (ASTM D1160) at 474 AET has a Mettler softening point (D3104) of at least 100°C, and which may be further characterized by having an average molecular weight higher than the average molecular weight of the petroleum-based raw material. This isotropic petroleum-based product may be used as a petroleum-based equivalent for coal tar as described further in this text. As a consequence, the present invention provides a solution for the problems mentioned earlier related to isotropic carbon precursor production as such, as well as related to the conversion of petroleum-based aromatic substances into suitable raw materials for isotropic carbon precursor production.

In a further embodiment of the present invention, the quenching (step (b)) is followed by a fractionating step and/or evaporation step. Such fractionating step and/or evaporation step is adapted to reach an isotropic carbon precursor product at the right viscosity. Person skilled in the art will appreciate that the reaction mixture may be iterated over the fractionating step and the HPTR step.

Alternatively, or in combination with the previous embodiment, a distillate of the fractionator and/or evaporator may be recycled into the HPTR step or into the quench step.

In a preferred embodiment of the present invention as illustrated in FIG1, in any of the embodiments as described throughout this text the fractionating step is followed by an evaporating step. Such evaporation step is adapted to reach the final carbon precursor characteristics if the composition of the distillate or the viscosity of the material no longer justifies fractionation.

As an optional embodiment in accordance with the present invention, in any of the embodiments as described throughout this text a hydrocarbon may be added to the petroleum-based raw material before the HPTR as a polymerization modifier or viscosity adjuster. Such hydrocarbon will be selected in order to control the behaviour in the HPTR by functionality towards polymerization or viscosity decrease.

In another optional embodiment of any process as described throughout this text, prior to step (a), the process comprises a pre-distillation of the petroleum-based raw material. The petroleum-based raw material may be additionally exposed to a distillation before the HTPR step adapted to control the pressure in the HPTR.

The petroleum-based raw material used as the feedstock for any process in accordance with the present invention is an aromatic hydrocarbon such as but not limited to Pyrolysis Fuel oil (PFO) or Ethylene Cracker residue (ECR) or decant oil (DO) or slurry oil, or hydrocracker/hydrotreater residue, or other aromatic streams such as solvent de-asphalting (SDA) based asphaltene fractions, or a combination thereof. The reactivity of the material can be tailored by combining different feedstocks and/or their distillates.

Alternatively to feedstock consisting of only petroleum-based raw material as mentioned above, the petroleum-based raw material may be optionally mixed with coaltar or coaltar distillates, or aromatic biogenic raw materials for use as feedstock.

Processes in accordance with the present invention may result in an isotropic petroleum-based carbon precursor characterized by an SPM between 65 and 280°C, preferably between 110 and 130°C, a CV > 50, and a mesophase > 10µm content below 1% vol, preferably < 0.1 % m/m. Preferably such carbon precursor is further characterized by a TI between 3 and 30 %m/m and/or a QI between 0 and 5.0 %m/m, preferably TI 5-25 % m/m and QI 0-2 % m/m.

The above isotropic carbon precursor material is particularly suitable for use in impregnation/binding/coating processes for the manufacturing of carbon electrodes, graphite electrodes, carbon-based particles and aggregates. Further, it is particularly suitable for the manufacturing of electrode paste for Söderberg smelters, in the manufacturing of semi-graphitized or graphitized electrodes for aluminum production, in the manufacturing of graphitized electrodes for electric arc furnaces, and in the manufacturing of carbon-containing materials for energy storage applications, being materials such as synthetic graphite, carbon-coated natural graphite, hard carbon, or silicon-carbon composites.

In a second aspect, the present invention provides for an isotropic petroleum-based product, of which the distillation residue (ASTM D1160) at 474 AET has a Mettler softening point (D3104) of at least 100°C. Such isotropic petroleum-based product may be in particular decant oil-based.

This isotropic petroleum-based product may be further characterized by having have an increased average molecular weight compared to the average molecular weight of the petroleum-based raw material, but with lower increase compared to the increase in average molecular weight (after step (c)) of the isotropic petroleum-based product of co-pending patent application EP24223849.1 filed December 31, 2024.

Such isotropic petroleum-based product as specified above may be used as a petroleum-based equivalent for coal tar.

In a third aspect, the present invention provides for a process for producing an isotropic carbon precursor comprising feeding a raw material to a low-pressure/low-temperature step (LPTR), said LPTR comprising maintaining the temperature between 300-430°C and pressure below 1 barg for a residence time between 1 and 40 hours under continuous stirring, and/or a fractionating and/or evaporation step whereby the raw material is an isotropic petroleum-based product of which the distillation residue (ASTM D1160) at 474 AET has a Mettler softening point (D3104) of at least 100°C.

This isotropic petroleum-based product may be further characterized by having a higher average molecular weight compared to the petroleum-based raw material it is derived from.

Preferably, the present invention provides for the use of the isotropic petroleum-based product as a raw material in the production of carbon precursor, more preferably as a raw material in the production of carbon precursor for use in binding/impregnation/coating processes in the manufacturing of electrodes, for use in the manufacturing of electrode paste for Söderberg smelters, in the manufacturing of semi-graphitized electrodes for aluminum production, or in the manufacturing of graphitized electrodes for electric arc furnaces, or as a carbon precursor in the manufacturing of carbon-containing materials for energy storage applications. such as synthetic graphite, carbon-coated natural graphite, or silicon-carbon composites, in the manufacturing of electrode paste for Söderberg smelters, in the manufacturing of semi-graphitized electrodes for aluminum production, or in the manufacturing of graphitized electrodes for electric arc furnaces, or as a carbon precursor in the manufacturing of carbon-containing materials for energy storage applications. such as synthetic graphite, carbon-coated natural graphite, or silicon-carbon composites.

In FIG 1, a schematic representation of a preferred embodiment according to the present invention is shown.

Below table provides an overview of analytical procedures of the product parameters as used in this text:

| | | |
|---|---|---|
| Mettler softening point, SPM | °C | ASTM D3104 |
| Quinoline insolubles, QI | % (by weight) | DIN 51921 |
| Toluene insolubles, TI | % (by weight) | DIN 51906 |
| Carbon yield (coking value CV), ALCAN | % (by weight) | ASTM D4715 |
| Dynamic viscosity | mPa.s | ASTM D5018 |
| Mesophase > 10µm | % (by volume) | ASTM D4616 |
| Molecular weight distribution - Average molecular weight | m/z | ASTM D1160 + MALDI |

## Claims

1. A process for producing a isotropic carbon precursor comprising:
a. a high-pressure/high-temperature step (HPTR) comprising heating a petroleum-based raw material and maintaining the temperature between 430-700°C at a pressure above 10 barg, for a residence time between 3 and 30 min, and
b. a subsequent quenching step.

2. The process of claim 1, wherein in the HPTR the petroleum-based raw material is maintained at a pressure between 10 and 60 barg, a temperature between 400-600°C, and a residence time between 5 and 30 min.

3. The process of claim 1 or 2, wherein the quenching step includes flash evaporation or a heat exchanger, or includes adding an oil, a decant oil distillate or an ethylene cracker residue distillate, or any combination thereof.

4. The process of any of claims 1 to 3, for producing an isotropic petroleum-based product of which the distillation residue (ASTM D1160) at 474 AET has a Mettler softening point (D3104) of at least 100°C.

5. The process of any of claims 1 to 4, wherein the quenching is followed by a fractionating and/or evaporation step.

6. The process of any of the above claims, wherein the HPTR is a heated tube reactor process, taken alone or in combination with a furnace.

7. The process of claim 6 wherein the tube reactor comprises a static mixer.

8. The process of any of claims 1 to 5, wherein the HPTR is a continuously stirred plug flow reactor process, taken alone or in combination with a furnace.

9. The process of any of the above claims, wherein the petroleum-based raw material comprises Pyrolysis Fuel oil (PFO) or Ethylene Cracker residue (ECR) or decant oil (DO) or slurry oil, or hydrocracker/hydrotreater residue, or other aromatic streams such as solvent de-asphalting (SDA) based asphaltene fractions, or a combination thereof, optionally mixed with coaltar or coaltar distillates, or aromatic biogenic raw materials.

10. The process of any of the above claims, wherein, prior to step (a), the process comprises a pre-distillation of the petroleum-based raw material.

11. A process for producing an isotropic carbon precursor comprising feeding a raw material into a low-pressure/low-temperature step (LPTR), said LPTR comprising maintaining the temperature between 300-430°C and pressure below 1 barg for a residence time between 1 and 40 hours under continuous stirring, and/or a fractionating and/or evaporation step, whereby the raw material is an isotropic petroleum-based product of which the distillation residue (ASTM D1160) at 474 AET has a Mettler softening point (D3104) of at least 100°C.

12. A petroleum-based carbon precursor **characterized by** an SPM between 65 and 280°C, a CV > 50% weight and a mesophase > 10µm content below 1% vol.
